# FASCICULE DE BREVET EUROPEEN

(11) **EP 3 945 725 B1**
(45) Date de publication et mention de la délivrance du brevet: **23.11.2022**
(21) Numéro de dépôt: 21186044.0
(22) Date de dépôt: 16.07.2021
(51) Int. Cl.: H04Q 9/00

(54) **PROCÉDÉ DE TRANSMISSION DE MESURES PERMETTANT DE RÉDUIRE LA CHARGE DU RÉSEAU**
VERFAHREN ZUR ÜBERTRAGUNG VON MESSWERTEN ZUR ENTLASTUNG DES NETZES
METHOD FOR TRANSMITTING MEASUREMENTS TO REDUCE THE LOAD OF THE NETWORK

(30) Priorité: 29.07.2020 FR 2008048
(43) Date de publication de la demande: 02.02.2022
(73) Titulaire: Sagemcom Energy & Telecom SAS, 92500 Rueil-Malmaison (FR)
(72) Inventeur: TEBOULLE, Henri, 92500 Rueil Malmaison (FR)
(74) Mandataire: Lavaud, Thomas

(56) Documents cités:
- US-A1- 2020 196 032

## Description

L'invention concerne le domaine des compteurs de fluide communicants.

### ARRIERE PLAN DE L'INVENTION

La publication US2020196032 représente un exemple de l'art antérieur décrivant un compteur d'eau communicant.

Les compteurs d'eau modernes, aussi appelés « compteurs d'eau communicants », comprennent bien sûr un module de mesure destiné à mesurer la consommation d'eau d'une installation, mais aussi un module de traitement et un module de communication.

Le module de traitement permet au compteur d'eau de réaliser un certain nombre de fonctionnalités, et notamment d'analyser des données diverses, relatives par exemple à la consommation d'eau de l'installation, à la facturation du client, à l'état du réseau de distribution d'eau, ou bien au fonctionnement du compteur d'eau lui-même.

Le module de communication, quant à lui, permet au compteur d'eau de communiquer avec un Système d'Information (SI) du gestionnaire du réseau, éventuellement via un concentrateur de données, une passerelle, ou bien un autre compteur (tel qu'un compteur d'eau communicant de quartier). Le module de communication est susceptible de mettre en œuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Chaque jour j, un compteur d'eau transmet au SI au moins une trame de mesure. Le jour j (comme tous les autres jours) est découpé en intervalles temporels successifs ayant chacun pour durée une heure.

La *payload* de la trame de mesure (c'est-à-dire la partie de la trame de mesure qui contient les données utiles à transmettre) contient par exemple un index de référence noté ici Cⱼ ainsi que 23 deltas d'index notés ici Δ_{j_1} à Δ_{j_23}.

L'index de référence Cⱼ est une mesure représentative d'une quantité d'eau distribuée via le conduit auquel est raccordé le compteur d'eau jusqu'au début du jour j.

Dans cet exemple, chaque delta d'index Δ_{j_k} est une mesure représentative d'une quantité d'eau qui est distribuée au cours du (k+1)^{ème} intervalle temporel du jour j. Le delta d'index correspondant au premier intervalle temporel (entre minuit et 1h du matin) n'est ici pas transmis.

Ainsi, par exemple, entre 2h et 3h du matin, c'est-à-dire au cours du troisième intervalle temporel du jour j (de la troisième heure du jour j), le compteur d'eau a mesuré qu'une quantité d'eau égale à Δ_{j_2} a été distribuée via le conduit auquel il est raccordé.

La *payload* d'une telle trame de mesure contient typiquement cinquante octets : quatre octets pour l'index de référence Cⱼ et deux octets pour chacun des 23 deltas d'index Δ_{j_1} à Δ_{j_23}.

### OBJET DE L'INVENTION

L'invention a pour objet de limiter la charge d'un réseau auquel sont reliés des compteurs de fluide communicants.

### RESUME DE L'INVENTION

En vue de la réalisation de ce but, on propose un procédé de transmission de mesures réalisées par un compteur de fluide au cours de périodes de mesure successives découpées chacune en intervalles temporels successifs, les mesures comprenant des premières mesures représentatives chacune d'une quantité de fluide distribuée au cours de l'un des intervalles temporels, le procédé de transmission comprenant l'étape, pour chaque période de mesure, de produire puis de transmettre au moins une trame de mesure telle que :
- si, au cours de ladite période de mesure, un nombre de premières mesures nulles est strictement inférieur à un nombre prédéterminé, alors la trame de mesure est une trame de mesure normale comportant des premières données de mesure normales comprenant toutes les premières mesures de ladite période de mesure ;
- sinon, la trame de mesure est une trame de mesure compacte qui comprend, si au moins une première mesure n'est pas nulle :
   o des données préliminaires qui comprennent des données d'identification d'intervalles temporels actifs de ladite période de mesure, qui sont associés à des premières mesures non nulles ;
   o des premières données de mesures compactes comprenant uniquement lesdites premières mesures non nulles, ordonnées selon un ordre prédéfini.

Ainsi, lorsque le procédé de transmission selon l'invention est mis en œuvre, pour une période de mesure donnée, une trame de mesure compacte est émise lorsqu'un certain nombre de premières mesures sont nulles au cours de ladite période de mesure donnée. Les trames de mesure compactes contiennent les données d'identification des intervalles temporels actifs et (uniquement) les premières mesures non nulles. La longueur des trames de mesure compactes est donc nettement inférieure à celle des trames de mesure normales. Cette optimisation de la longueur des trames de mesure permet de réduire de manière significative la charge du réseau.

On propose de plus un procédé de transmission tel que précédemment décrit, dans lequel la trame de mesure comporte des deuxièmes données de mesure comprenant une deuxième mesure représentative d'une quantité de fluide distribuée jusqu'au début de ladite période de mesure, les deuxièmes données de mesure comprenant en outre un bit de mode positionné à une première position prédéfinie et présentant une première valeur prédéfinie si la trame de mesure est une trame de mesure normale ou une deuxième valeur prédéfinie si la trame de mesure est une trame de mesure compacte.

On propose de plus un procédé de transmission tel que précédemment décrit, dans lequel le bit de mode est un bit de poids fort d'au moins un octet contenant les deuxièmes données de mesure.

On propose de plus un procédé de transmission tel que précédemment décrit, dans lequel les données préliminaires de la trame de mesure compacte comprennent un bit d'activité positionné à une deuxième position prédéfinie et présentant une troisième valeur prédéfinie si toutes les premières mesures sont nulles ou une quatrième valeur prédéfinie si au moins une première mesure n'est pas nulle.

On propose de plus un procédé de transmission tel que précédemment décrit, dans lequel le bit d'activité est un bit de poids fort d'au moins un octet contenant les données préliminaires.

On propose de plus un procédé de transmission tel que précédemment décrit, dans lequel les données d'identification comprennent des bits d'identification, chaque bit d'identification étant associé à un intervalle temporel, les bits d'identification se succédant selon un ordre chronologique des intervalles temporels, chaque bit d'identification associé à un intervalle temporel présentant une cinquième valeur prédéfinie si ledit intervalle temporel est un intervalle temporel actif associé à une première mesure non nulle ou une sixième valeur prédéfinie si ledit intervalle temporel est un intervalle temporel inactif associé à une première mesure nulle.

On propose de plus un procédé de transmission tel que précédemment décrit, dans lequel l'ordre chronologique débute au niveau d'un bit de poids faible et s'achève au niveau d'un bit de poids fort d'au moins un octet contenant les données d'identification.

On propose de plus un procédé de transmission tel que précédemment décrit, dans lequel les données préliminaires présentent une longueur réduite lorsque toutes les premières mesures sont nulles.

On propose de plus un procédé de transmission tel que précédemment décrit, dans lequel chaque période de mesure a pour durée un jour et dans lequel chaque intervalle temporel a pour durée une heure.

On propose en outre un compteur de fluide agencé pour mettre en œuvre le procédé de transmission tel que précédemment décrit, le compteur de fluide comportant un module de mesure pour réaliser les premières mesures, un module de traitement pour produire les trames de mesure et un module de communication pour transmettre les trames de mesure.

On propose en outre un programme d'ordinateur comprenant des instructions qui conduisent le compteur de fluide précédemment décrit à exécuter les étapes du procédé de transmission qui vient d'être décrit.

On propose en outre un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente une trame de mesure normale ;
[Fig. 2] la figure 2 représente une trame de mesure compacte ;
[Fig. 3] la figure 3 représente une trame de mesure compacte, dans le cas où toutes les premières mesures sont nulles ; [Fig. 4] la figure 4 représente une trame de mesure compacte, dans le cas où une ou plusieurs premières mesures ne sont pas nulles.

### DESCRIPTION DETAILLEE DE L'INVENTION

Le procédé de transmission selon l'invention est ici destiné à transmettre des trames de mesure comprenant des mesures réalisées par un compteur d'eau.

Le compteur d'eau comporte un module de mesure, un module de traitement et un module de communication.

Le module de mesure permet de réaliser les mesures de consommation d'eau. Le module de mesure est par exemple un module de mesure ultrasonique ou mécanique.

Le module de traitement acquiert les mesures et produit les trames de mesure. Le module de traitement comporte par exemple un processeur, un microcontrôleur, ou bien un circuit logique programmable tel qu'un FPGA (pour *Field Programmable Gate Arrays*) ou un ASIC (pour *Application Specific Integrated Circuit*).

Le module de communication permet de transmettre les trames de mesure et comprend à cet effet un émetteur ou un émetteur/récepteur susceptible de mettre en œuvre tout type de communication (par exemple une communication via un réseau cellulaire, une communication selon le protocole LoRa, une communication radio selon le standard *Wize,* etc.).

Le format des trames de mesure est par exemple conforme ici au format des trames du protocole LoRa.

Le compteur d'eau réalise les mesures de consommation d'eau selon un processus répété par périodes de mesure successives découpées chacune en intervalles temporels successifs. Ici, chaque période de mesure a pour durée un jour et chaque intervalle temporel a pour durée une heure.

Chaque jour, le compteur d'eau transmet une trame de mesure dont la *payload* contient des premières données de mesure et des deuxièmes données de mesure. Les premières données de mesure comprennent des premières mesures, qui sont les deltas d'index, alors que les deuxièmes données de mesure comprennent une deuxième mesure, qui est l'index de référence.

Il est relativement fréquent que la consommation d'eau d'une installation soit nulle au cours de périodes assez longues d'un même jour. C'est par exemple le cas la nuit, ou bien le jour, en semaine, lorsque les parents d'une famille travaillent et que les enfants sont à l'école. Au cours de ces périodes sans consommation d'eau, les deltas d'index sont nuls et l'index de consommation n'évolue pas.

Pour diminuer la charge du réseau, l'invention consiste à ne pas transmettre (sous certaines conditions) les deltas d'index qui sont nuls. Seules les informations non nulles sont transmises : on ne transmet pas l'information de la courbe de charge qui est alors implicite.

La transmission des mesures s'effectue selon deux modes distincts : un mode normal et un mode compact.

Le mode normal est utilisé si, au cours d'un jour donné, un nombre de deltas d'index nuls est strictement inférieur à un nombre prédéterminé (c'est-à-dire si le jour donné comprend peu de périodes de consommation nulle).

Si cette condition n'est pas vérifiée, c'est le mode compact qui est utilisé.

Ici, le nombre prédéterminé est égal à deux. Ainsi, si un seul delta d'index du jour donné est nul, le mode normal est utilisé. Si le nombre de deltas d'index nuls est supérieur ou égal à deux, le mode compact est utilisé.

Bien sûr, le nombre prédéterminé peut être différent de deux, et pourrait par exemple être égal à un, de sorte que le mode compact est utilisé à partir du moment où au moins un delta d'index est nul.

Pour distinguer une trame de mesure normale d'une trame de mesure compacte, on utilise un bit de mode.

Le bit de mode est positionné dans la trame de mesure à une première position prédéfinie. Le bit de mode présente une première valeur prédéfinie si la trame de mesure est une trame de mesure normale ou une deuxième valeur prédéfinie si la trame de mesure est une trame de mesure compacte. Il est ainsi possible, à la réception de la trame de mesure, de savoir si ladite trame de mesure est une trame de mesure normale ou une trame de mesure compacte.

Le bit de mode est ici le bit de poids fort d'au moins un octet contenant les deuxièmes données de mesure. Le bit de mode est donc intégré dans les octets codant l'index de référence.

Les deuxièmes données de mesure comprennent quatre octets, sur lesquels est codé l'index de référence. Le bit de poids fort est le bit de poids fort de l'octet de gauche (octet de poids fort) des quatre octets des deuxièmes données de mesure.

En effet, la valeur maximale de l'index de référence correspond en décimal à 999999999 et correspond donc en hexadécimal à 3B9AC9FF. Le bit de poids fort est donc disponible pour jouer ce rôle.

La première valeur prédéfinie est ici égale à 0 et la deuxième valeur prédéfinie est ici égale à 1.

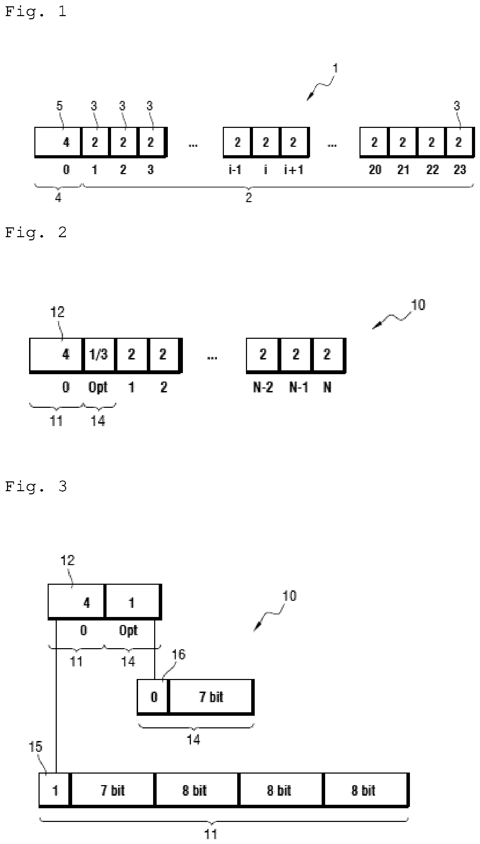

Dans le mode normal (bit de mode égal à 0), en référence à la figure 1, la trame de mesure envoyée est donc une trame de mesure normale 1. Les premières données de mesure sont des premières données de mesure normales 2 qui comprennent tous les deltas d'index 3 du jour donné, c'est-à-dire ici les 23 deltas d'index 3. Chaque delta d'index 3 est codé sur deux octets.

Les deuxièmes données de mesure 4 comprennent l'index de référence 5 et le bit de mode qui est égal à 0.

La *payload* de la trame de mesure normale comprend donc cinquante octets : quatre octets, à gauche, pour les deuxièmes données de mesure 4, ces quatre octets codant l'index de référence 5 et comprenant le bit de mode, puis deux octets par delta d'index 3 pour les premières données de mesure normales 2. Les ensembles de deux octets des premières mesures normales 2, codant les deltas d'index 3, se succèdent de gauche à droite selon un ordre chronologique des intervalles temporels associés aux deltas d'index.

Par « se succèdent ... selon un ordre chronologique des intervalles temporels », on entend que les ensembles de deux octets codant les deltas d'index se succèdent dans l'ordre chronologique de survenue des intervalles temporels associés aux deltas d'index : l'ensemble de deux octets codant le delta d'index associé au 2^{ème} intervalle temporel (compris entre 1h du matin et 2h du matin) est suivi (de la gauche vers la droite) par l'ensemble de deux octets codant le delta d'index associé au 3^{ème} intervalle temporel (compris entre 2h du matin et 3h du matin), qui est suivi par l'ensemble de deux octets codant le delta d'index associé au 4^{ème} intervalle temporel (compris entre 3h du matin et 4h du matin), qui est suivi par l'ensemble de deux octets codant le delta d'index associé au 5^{ème} intervalle temporel (compris entre 4h du matin et 5h du matin), etc.

La *payload* de la trame de mesure normale 1 correspond au cas standard de la structure de la *payload* de la trame de courbe de charge (avec le bit de poids fort à 0 des octets codant l'index de référence).

Dans le mode compact (bit de mode égal à 1), la trame de mesure est une trame de mesure compacte.

En référence à la figure 2, la trame de mesure compacte 10 comprend des deuxièmes données de mesure 11 semblables à celles de la trame de mesure normale 1 (si ce n'est que le bit de mode est égal à 1 et non à 0) et comprenant l'index de référence 12.

La trame de mesure compacte 10 comprend ensuite des données préliminaires 14.

Deux cas peuvent se présenter : tous les deltas d'index du jour donné sont nuls, ou bien au moins un delta d'index n'est pas nul.

Les données préliminaires 14 de la trame de mesure compacte 10 comprennent un bit d'activité positionné à une deuxième position prédéfinie et présentant une troisième valeur prédéfinie si tous les deltas d'index sont nuls ou une quatrième valeur prédéfinie si au moins un delta d'index n'est pas nul.

Ici, le bit d'activité est un bit de poids fort d'au moins un octet contenant les données préliminaires 14.

La troisième valeur prédéfinie est égale à 0 et la quatrième valeur prédéfinie est égale à 1.

Les données préliminaires 14 présentent une longueur réduite lorsque tous les deltas d'index sont nuls (et une longueur normale sinon).

La longueur normale des données préliminaires 14 est de trois octets, et la longueur réduite est de un octet.

Le bit d'activité est le bit de poids fort de l'octet de gauche (octet de poids fort) de l'unique ou des trois octets des données préliminaires 14.

En référence à la figure 3, si tous les deltas d'index sont nuls, la *payload* de la trame de mesure compacte 10 comprend donc cinq octets seulement au lieu de cinquante si l'invention n'était pas mise en œuvre : quatre octets pour les deuxièmes données de mesures 11 et un octet pour les données préliminaires 14.

Les quatre octets des deuxièmes données de mesure 11 incluent le bit de mode 15, qui est égal à 1 et qui est donc suivi de 7 bits puis de trois octets de 8 bits chacun (pour coder l'index de référence 12).

L'octet des données préliminaires 14 inclut le bit d'activité 16, qui est égal à 0 et qui est donc suivi de 7 bits.

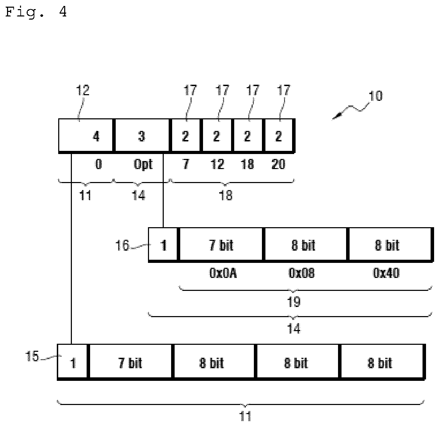

En référence à la figure 4, si au moins un delta d'index n'est pas nul, la *payload* de la trame de mesure compacte 10 comprend quatre octets pour les deuxièmes données de mesures 11, trois octets pour les données préliminaires 14, et deux octets par delta d'index non nul 17 pour les premières données de mesures compactes 18.

Les données préliminaires 14 comprennent des données d'identification 19 d'intervalles temporels actifs du jour donné, qui sont associés à des deltas d'index non nuls. On distingue donc les intervalles temporels actifs, au cours desquels la consommation d'eau a été non nulle, et les intervalles temporels inactifs, au cours desquels la consommation d'eau a été nulle.

Les données d'identification 19 comprennent des bits d'identification, chaque bit d'identification étant associé à un intervalle temporel. Les bits d'identification se succèdent selon un ordre chronologique des intervalles temporels, chaque bit d'identification associé à un intervalle temporel présentant une cinquième valeur prédéfinie si ledit intervalle temporel est un intervalle temporel actif associé à un delta d'index non nul ou une sixième valeur prédéfinie si ledit intervalle temporel est un intervalle temporel inactif associé à un delta d'index nul.

Ici, la cinquième valeur prédéfinie est égale à 1 et la sixième valeur prédéfinie est égale à 0 : cela signifie que le bit d'identification d'un intervalle temporel actif est égal à 1 et le bit d'identification d'un intervalle temporel inactif est égal à 0.

L'ordre chronologique débute au niveau d'un bit de poids faible d'au moins un octet contenant les données d'identification. Les données d'identification 19 comprennent deux octets et sept bits (le dernier bit du troisième octet des données préliminaires 14 étant le bit d'activité 16, ici égal à 1).

Dans l'exemple de la figure 4, les bits d'identification ont pour valeur en hexadécimal 0x0A, 0x08, 0x40, c'est-à-dire en binaire : 000 1010 0000 1000 0100 0000.

En utilisant l'ordre chronologique et en partant du bit de poids faible (à droite), on voit donc que le 7^{ème} bit, le 12^{ème} bit, le 18^{ème} bit et le 20^{ème} bit des bits d'identification sont à 1, ce qui signifie que les 7^{ème}, 12^{ème}, 18^{ème} et 20^{ème} deltas d'index sont non nuls (et donc que les 8^{ème}, 13^{ème}, 19^{ème} et 21^{ème} intervalles temporels du jour donné sont actifs).

La *payload* de la trame de mesure compacte 10 comprend ensuite les premières données de mesure compactes 18, qui comprennent uniquement les deltas d'index non nuls 17 associés aux intervalles temporels actifs. Chaque delta d'index non nul 17 est codé par un ensemble de deux octets. Les deltas d'index nuls, dont le bit d'identification est nul, ne sont pas transmis.

Les deltas d'index non nuls 17 sont ordonnés selon un ordre prédéfini.

L'ordre prédéfini est à nouveau un ordre chronologique.

Les ensembles de deux octets associés aux deltas d'index non nuls 17 se succèdent de gauche à droite selon un ordre chronologique des intervalles temporels associés aux deltas d'index : l'ensemble de deux octets codant le 7^{ème} delta d'index est suivi (de la gauche vers la droite) par l'ensemble de deux octets codant le 12^{ème} delta d'index, qui est suivi par l'ensemble de deux octets codant le 18^{ème} delta d'index, qui est suivi par l'ensemble de deux octets codant le 20^{ème} delta d'index.

La *payload* de la trame de mesure compacte 10 comprend donc ici quinze octets au lieu de cinquante si l'invention n'était pas mise en œuvre.

Bien entendu, l'invention n'est pas limitée au mode de réalisation décrit mais englobe toute variante entrant dans le champ de l'invention telle que définie par les revendications.

Les périodes de mesure ne sont pas nécessairement des jours, et les intervalles temporels ne sont pas nécessairement des heures.

Les mesures transmises par le procédé de transmission selon l'invention ne sont pas nécessairement des mesures réalisées par un compteur d'eau, mais peuvent être des mesures réalisées par un compteur d'un fluide différent : compteur de gaz, de chaleur, de pétrole, etc.

On note que les trames de mesure, comprenant les mesures réalisées par le compteur de fluide, peuvent être produites et transmises par le compteur de fluide qui a réalisé les mesures (comme c'est le cas dans la présente description), mais aussi par une autre entité qui a reçu lesdites mesures : concentrateur de données, passerelle, autre compteur, etc.

## Revendications

1. Procédé de transmission de mesures réalisées par un compteur de fluide au cours de périodes de mesure successives découpées chacune en intervalles temporels successifs, les mesures comprenant des premières mesures représentatives chacune d'une quantité de fluide distribuée au cours de l'un des intervalles temporels, le procédé de transmission comprenant l'étape, pour chaque période de mesure, de produire puis de transmettre au moins une trame de mesure (1 ; 10) telle que :
- si, au cours de ladite période de mesure, un nombre de premières mesures nulles est strictement inférieur à un nombre prédéterminé, alors la trame de mesure est une trame de mesure normale (1) comportant des premières données de mesure normales (2) comprenant toutes les premières mesures (3) de ladite période de mesure ;
- sinon, la trame de mesure est une trame de mesure compacte (10) qui comprend, si au moins une première mesure n'est pas nulle :
o des données préliminaires (14) qui comprennent des données d'identification (19) d'intervalles temporels actifs de ladite période de mesure, qui sont associés à des premières mesures non nulles ;
o des premières données de mesures compactes (18) comprenant uniquement lesdites premières mesures non nulles, ordonnées selon un ordre prédéfini.

2. Procédé de transmission selon la revendication 1, dans lequel la trame de mesure (1 ; 10) comporte des deuxièmes données de mesure (4 ; 11) comprenant une deuxième mesure (5 ; 12) représentative d'une quantité de fluide distribuée jusqu'au début de ladite période de mesure, les deuxièmes données de mesure comprenant en outre un bit de mode (15) positionné à une première position prédéfinie et présentant une première valeur prédéfinie si la trame de mesure est une trame de mesure normale (1) ou une deuxième valeur prédéfinie si la trame de mesure est une trame de mesure compacte (10).

3. Procédé de transmission selon la revendication 2, dans lequel le bit de mode (15) est un bit de poids fort d'au moins un octet contenant les deuxièmes données de mesure (11) .

4. Procédé de transmission selon l'une des revendications précédentes, dans lequel les données préliminaires (14) de la trame de mesure compacte comprennent un bit d'activité (16) positionné à une deuxième position prédéfinie et présentant une troisième valeur prédéfinie si toutes les premières mesures sont nulles ou une quatrième valeur prédéfinie si au moins une première mesure n'est pas nulle.

5. Procédé de transmission selon la revendication 4, dans lequel le bit d'activité (16) est un bit de poids fort d'au moins un octet contenant les données préliminaires (14).

6. Procédé de transmission selon l'une des revendications précédentes, dans lequel les données d'identification (19) comprennent des bits d'identification, chaque bit d'identification étant associé à un intervalle temporel, les bits d'identification se succédant selon un ordre chronologique des intervalles temporels, chaque bit d'identification associé à un intervalle temporel présentant une cinquième valeur prédéfinie si ledit intervalle temporel est un intervalle temporel actif associé à une première mesure non nulle ou une sixième valeur prédéfinie si ledit intervalle temporel est un intervalle temporel inactif associé à une première mesure nulle.

7. Procédé de transmission selon la revendication 6, dans lequel l'ordre chronologique débute au niveau d'un bit de poids faible et s'achève au niveau d'un bit de poids fort d'au moins un octet contenant les données d'identification (19) .

8. Procédé de transmission selon l'une des revendications précédentes, dans lequel les données préliminaires (14) présentent une longueur réduite lorsque toutes les premières mesures sont nulles.

9. Procédé de transmission selon l'une des revendications précédentes, dans lequel chaque période de mesure a pour durée un jour et dans lequel chaque intervalle temporel a pour durée une heure.

10. Compteur de fluide agencé pour mettre en œuvre le procédé de transmission selon l'une des revendications précédentes, le compteur de fluide comportant un module de mesure pour réaliser les premières mesures, un module de traitement pour produire les trames de mesure et un module de communication pour transmettre les trames de mesure.

11. Programme d'ordinateur comprenant des instructions qui conduisent le compteur de fluide selon la revendication 10 à exécuter les étapes du procédé de transmission selon l'une des revendications 1 à 9.

12. Support d'enregistrement lisible par ordinateur, sur lequel est enregistré le programme d'ordinateur selon la revendication 11.

## Patentansprüche

1. Übertragungsverfahren zur Übertragung von Messungen, die von einem Fluidzähler während aufeinanderfolgender Messperioden, die jeweils in aufeinanderfolgende Zeitintervalle unterteilt sind, durchgeführt werden, wobei die Messungen erste Messungen umfassen, die jeweils repräsentativ für eine Fluidmenge sind, die während eines der Zeitintervalle verteilt wird, wobei das Übertragungsverfahren für jede Messperiode den Schritt des Erzeugens und dann des Übertragens mindestens eines Messrahmens (1; 10) umfasst, derart, dass:
- wenn während der genannten Messperiode eine Anzahl von ersten Messungen, die Null sind, strikt kleiner als eine vorbestimmte Anzahl ist, dann der Messrahmen ein normaler Messrahmen (1) ist, der normale erste Messdaten (2) umfasst, die alle ersten Messungen (3) der genannten Messperiode umfassen;
- andernfalls der Messrahmen ein kompakter Messrahmen (10) ist, der, wenn mindestens eine erste Messung nicht Null ist, umfasst:
o vorläufige Daten (14), die Identifikationsdaten (19) zur Identifikation von aktiven Zeitintervallen der genannten Messperiode umfassen, die ersten Messungen, die nicht Null sind, zugeordnet sind;
o kompakte erste Messdaten (18), die nur die genannten ersten Messungen umfassen, die nicht Null sind, geordnet nach einer vordefinierten Reihenfolge.

2. Übertragungsverfahren nach Anspruch 1, bei dem der Messrahmen (1; 10) zweite Messdaten (4; 11) umfasst, die eine zweite Messung (5; 12) umfassen, die repräsentativ für eine Fluidmenge ist, die bis zum Beginn der genannten Messperiode verteilt wird, wobei die zweiten Messdaten ferner ein Modusbit (15) umfassen, das an einer ersten vordefinierten Position positioniert ist und einen ersten vordefinierten Wert aufweist, wenn der Messrahmen ein normaler Messrahmen (1) ist, oder einen zweiten vordefinierten Wert, wenn der Messrahmen ein kompakter Messrahmen (10) ist.

3. Übertragungsverfahren nach Anspruch 2, bei dem das Modusbit (15) ein höchstwertiges Bit mindestens eines Oktetts ist, das die zweiten Messdaten (11) enthält.

4. Übertragungsverfahren nach einem der vorhergehenden Ansprüche, bei dem die vorläufigen Daten (14) des kompakten Messrahmens ein Aktivitätsbit (16) umfassen, das an einer zweiten vordefinierten Position positioniert ist und einen dritten vordefinierten Wert aufweist, wenn alle ersten Messungen Null sind, oder einen vierten vordefinierten Wert, wenn mindestens eine erste Messung nicht Null ist.

5. Übertragungsverfahren nach Anspruch 4, bei dem das Aktivitätsbit (16) ein höchstwertiges Bit mindestens eines Oktetts ist, das die vorläufigen Daten (14) enthält.

6. Übertragungsverfahren nach einem der vorhergehenden Ansprüche, bei dem die Identifikationsdaten (19) Identifikationsbits umfassen, wobei jedes Identifikationsbit einem Zeitintervall zugeordnet ist, wobei die Identifikationsbits gemäß einer chronologischen Reihenfolge der Zeitintervalle aufeinanderfolgen, wobei jedes Identifikationsbit, das einem Zeitintervall zugeordnet ist, einen fünften vordefinierten Wert aufweist, wenn das genannte Zeitintervall ein aktives Zeitintervall ist, das einer ersten Messung, die nicht Null ist, zugeordnet ist, oder einen sechsten vordefinierten Wert, wenn das genannte Zeitintervall ein inaktives Zeitintervall ist, das einer ersten Messung zugeordnet ist, die Null ist.

7. Übertragungsverfahren nach Anspruch 6, bei dem die chronologische Reihenfolge in einem Bereich eines niederwertigen Bits beginnt und im Bereich eines höchstwertigen Bits mindestens eines Oktetts endet, das die Identifikationsdaten (19) enthält.

8. Übertragungsverfahren nach einem der vorhergehenden Ansprüche, bei dem die vorläufigen Daten (14) eine reduzierte Länge aufweisen, wenn alle ersten Messungen Null sind.

9. Übertragungsverfahren nach einem der vorhergehenden Ansprüche, bei dem jede Messperiode als Dauer einen Tag hat und bei dem jedes Zeitintervall als Dauer eine Stunde hat.

10. Fluidzähler, der ausgebildet ist, um das Übertragungsverfahren nach einem der vorhergehenden Ansprüche durchzuführen, wobei der Fluidzähler ein Messmodul umfasst, um die ersten Messungen durchzuführen, ein Verarbeitungsmodul, um die Messrahmen zu erzeugen, und ein Kommunikationsmodul, um die Messrahmen zu übertragen.

11. Computerprogramm, umfassend Anweisungen, die den Fluidzähler nach Anspruch 10 dazu veranlassen, die Schritte des Übertragungsverfahrens nach einem der Ansprüche 1 bis 9 auszuführen.

12. Computerlesbarer Aufzeichnungsträger, auf dem das Computerprogramm nach Anspruch 11 gespeichert ist.

## Claims

1. A transmission method for transmitting measurements taken by a fluid meter during successive measurement periods, each subdivided into successive time intervals, the measurements comprising first measurements, each representative of a quantity of fluid distributed during a respective one of the time intervals, the transmission method comprising, for each measurement period, the step of producing and then transmitting at least one measurement frame (1; 10) such that:
• when the number of first measurements that are equal to zero is strictly less than a predetermined number during said measurement period, then the measurement frame is a normal measurement frame (1) comprising normal first measurement data (2) comprising all of the first measurements (3) of said measurement period;
• otherwise the measurement frame is a compact measurement frame (10) that, when there is at least one first measurement that is not equal to zero, comprises:
o preliminary data (14) comprising identification data (19) for identifying active time intervals of said measurement period, which active time intervals are associated with respective non-zero first measurements;
o compact first measurement data (18) comprising only said non-zero first measurements ordered in a predefined order.

2. A transmission method according to claim 1, wherein the measurement frame (1; 10) includes second measurement data (4; 11) comprising a second measurement (5; 12) representative of the quantity of fluid distributed up to the beginning of said measurement period, the second measurement data further comprising a mode bit (15) positioned in a first predefined position and presenting a first predefined value when the measurement frame is a normal measurement frame (1) or presenting a second predefined value when the measurement frame is a compact measurement frame (10).

3. A transmission method according to claim 2, wherein the mode bit (15) is the most significant bit of at least one octet containing the second measurement data (11).

4. A transmission method according to any preceding claim, wherein the preliminary data (14) of the compact measurement frame comprises an activity bit (16) positioned in a second predefined position and presenting a third predefined value when all of the first measurements are equal to zero, or presenting a fourth predefined value when at least one first measurement is not equal to zero.

5. A transmission method according to claim 4, wherein the activity bit (16) is the most significant bit of at least one octet containing the preliminary data (14).

6. A transmission method according to any preceding claim, wherein the identification data (19) comprises identification bits, each associated with a respective time interval, the identification bits following one another in chronological order of the time intervals, each identification bit associated with a time interval presenting a fifth predefined value when said time interval is an active time interval associated with a non-zero first measurement that is not equal to zero, or presenting a sixth predefined value when said time interval is an inactive time interval associated with a first measurement that is equal to zero.

7. A transmission method according to claim 6, wherein the chronological order begins with the least significant bit and ends with the most significant bit of at least one octet containing the identification data (19).

8. A transmission method according to any preceding claim, wherein the preliminary data (14) presents a reduced length when all of the first measurements are equal zero.

9. A transmission method according to any preceding claim, wherein each measurement period has a duration of one day, and wherein each time interval has a duration of one hour.

10. A fluid meter arranged to perform the transmission method according to any preceding claim, the fluid meter comprising a measurement module for taking the first measurements, a processor module for producing the measurement frames, and a communication module for transmitting the measurement frames.

11. A computer program including instructions for causing the fluid meter according to claim 10 to execute the steps of the transmission method according to any one of claims 1 to 9.

12. A computer readable storage medium having stored thereon the computer program according to claim 11.
